# EUROPEAN PATENT APPLICATION

(11) **EP 3 869 418 A1**
(43) Date of publication of application: **25.08.2021**
(21) Application number: 18937480.4
(22) Date of filing: 18.10.2018
(51) Int. Cl.: G06N 3/08

(54) **LEARNING PROGRAM, LEARNING METHOD, AND LEARNING DEVICE**

(71) Applicant: FUJITSU LIMITED, Kanagawa 211-8588 (JP)
(72) Inventor: UEMURA, Kento, Kawasaki-shi, Kanagawa 211-8588 (JP); YASUTOMI, Suguru, Kawasaki-shi, Kanagawa 211-8588 (JP); KATOH, Takashi, Kawasaki-shi, Kanagawa 211-8588 (JP)
(74) Representative: Hoffmann Eitle
(86) International application number: PCT/JP2018/038883
(87) International publication number: WO 2020/079815

(57) **Abstract**

A learning device inputs input data to be learned to a learned machine learning model. Then, the learning device generates restored data using a plurality of restorers respectively corresponding to a plurality of features from the plurality of features generated by a machine learning model corresponding to each piece of input data, for each piece of input data input to the machine learning model. Thereafter, the learning device makes the plurality of restorers perform learning so that the plurality of pieces of restored data respectively generated by each of the plurality of restorers approaches the input data.

## Description

### TECHNICAL FIELD

The embodiments discussed herein are related to a learning program, a learning method, and a learning device.

### BACKGROUND ART

In deep learning such as sequential learning, because storing learning data causes a risk of information leakage or the like, learning data is retained as a feature of a machine learning model that is a form converted from the original learning data. Furthermore, in a case where pieces of data from different acquisition sources is used as learning data from which each of a plurality of machine learning models is learned, the learning data used in the previous learning is retained also in the form of the feature.

In this way, in a case where the feature is retained, how much information of the original learning data remains in the feature is evaluated. For example, a technique has been known for obtaining input data having the same feature in a learned neural network, estimating information retained in the feature on the basis of the input data, and determining whether or not to retain the feature.

### CITATION LIST

### PATENT DOCUMENT

Patent Document 1: International Publication Pamphlet No. WO 2016/132468
Patent Document 2: Japanese Laid-open Patent Publication No. 2017-174298
Patent Document 3: Japanese Laid-open Patent Publication No. 2016-126597
Patent Document 4: Japanese Laid-open Patent Publication No. 2017-126112

### SUMMARY OF INVENTION

### TECHNICAL PROBLEM

However, the input data obtained by the above technique is not necessarily data suitable for determination of whether or not to retain the learning data that has been used for learning. For example, in order to convert a feature z obtained by applying input data x to a learned machine learning model into a form of the original input data x, input data x' with which the feature z can be most easily obtained is obtained using a gradient method. However, there is a plurality of pieces of input data with which the feature z is obtained, the input data x' obtained using the gradient method is not necessarily data useful for determination such as risk evaluation.

In one aspect, an object is to provide a learning program, a learning method, and a learning device that can appropriately determine whether or not to retain data.

### SOLUTION TO PROBLEM

In a first idea, a learning program causes a computer to execute processing for generating restored data using a plurality of restorers respectively corresponding to a plurality of features from the plurality of features generated by a machine learning model corresponding to each piece of input data, for each piece of the input data input to the machine learning model. The learning program causes the computer to execute processing for learning the plurality of restorers so that the plurality of pieces of restored data respectively generated by each of the plurality of restorers approaches the input data.

### ADVANTAGEOUS EFFECTS OF INVENTION

According to one embodiment, it is possible to appropriately determine whether or not to retain data.

### BRIEF DESCRIPTION OF DRAWINGS

FIG. 1 is a diagram for explaining an overall example of a learning device according to a first embodiment.
FIG. 2 is a diagram for explaining a reference technique.
FIG. 3 is a functional block diagram illustrating a functional configuration of the learning device according to the first embodiment.
FIG. 4 is a diagram for explaining a learning example of a machine learning model.
FIG. 5 is a diagram for explaining a feature.
FIG. 6 is a diagram for explaining learning of a decoder.
FIG. 7 is a diagram for explaining an example of an evaluation method.
FIG. 8 is a diagram for explaining another example of the evaluation method.
FIG. 9 is a flowchart illustrating a flow of processing.
FIG. 10 is a diagram for explaining a learning example according to a second embodiment.
FIG. 11 is a diagram for explaining a learning example according to a third embodiment.
FIG. 12 is a diagram for explaining a learning example according to a fourth embodiment.
FIG. 13 is a diagram for explaining a hardware configuration example.

### DESCRIPTION OF EMBODIMENTS

Hereinafter, embodiments of a learning program, a learning method, and a learning device according to the present invention will be described in detail with reference to the drawings. Note that the present invention is not limited to the embodiments. In addition, each of the embodiments may be appropriately combined within a range without inconsistency.

### [First Embodiment]

### [Overall Example]

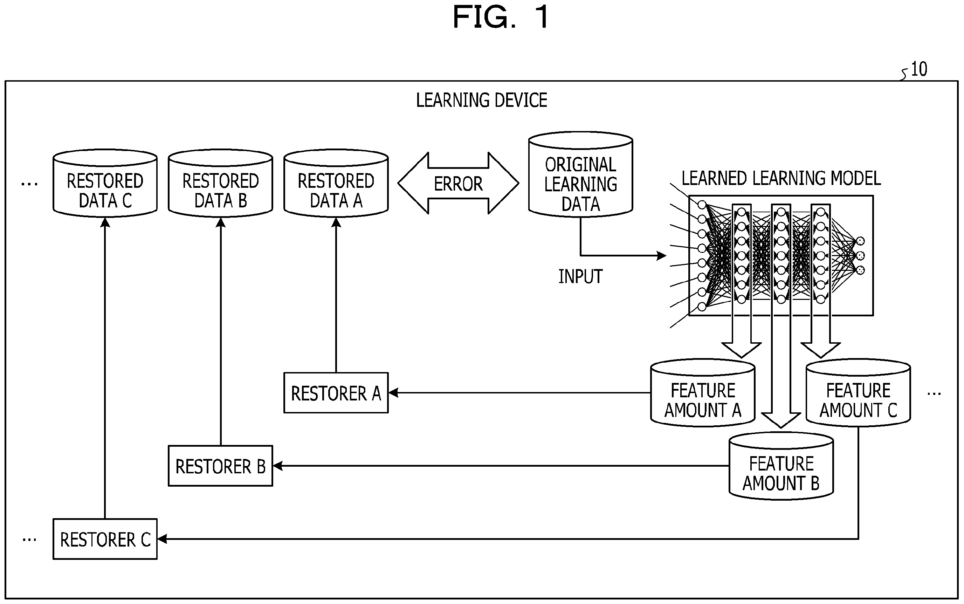

FIG. 1 is a diagram for explaining an overall example of a learning device according to a first embodiment. A learning device 10 illustrated in FIG. 1 learns a machine learning model that, for example, classifies images of cars, people, or the like. Specifically, the learning device 10 learns a neural network (NN) or the like so as to execute learning processing using machine learning, deep learning (DL), or the like and correctly determine (classify) learning data for each event.

Generally, in deep learning or the like, because it is possible to improve a machine learning model as an amount of learning data increases, it is better to have larger amount of learning data. However, it is difficult to collect the learning data. Therefore, it is considered to learn a plurality of machine learning models using pieces of learning data acquired from different acquisition sources. However, in a business field using customer data, continuous retention of customer data after learning has been completed and use of the customer data for another customer task (learning) or the like cause a risk of contractual problems and information leakage. For this reason, the data is held as the feature that is a form converted from the original learning data. Although the risk can be reduced by retaining the data as the feature, it is important to accurately evaluate how much information of the original learning data remains in the feature.

Therefore, the learning device 10 according to the first embodiment learns a restorer that generates a plurality of pieces of restored data from a plurality of features generated from a machine learning model and evaluates a feature to be retained on the basis of a decoding result by a decoder. Specifically, the learning device 10 generates the restored data using the restorer corresponding to each feature from each feature generated by the machine learning model corresponding to each piece of the learning data, for each piece of the learning data input to the machine learning model. Then, the learning device 10 makes the plurality of restorers perform learning so that the plurality of pieces of restored data respectively generated by each of the plurality of restorers approaches the learning data.

As described using FIG. 1 as an example, the learning device 10 learns a machine learning model using the NN by using each of the plurality of pieces of learning data. Thereafter, the learning device 10 inputs the original learning data used for the machine learning model in the learned machine learning model and acquires a feature A, a feature B, and a feature C from respective intermediate layers of the NN. Then, the learning device 10 generates restored data A by inputting the feature A into a restorer A, and learns the restorer A so as to reduce an error between the restored data A and the original learning data. Similarly, the learning device 10 generates restored data B by inputting the feature B into a restorer B, and learns the restorer B so as to reduce an error between the restored data B and the original learning data. Similarly, the learning device 10 generates restored data C by inputting the feature C into a restorer C, and learns the restorer C so as to reduce an error between the restored data C and the original learning data.

In this way, the learning device 10 learns each restorer using each feature obtained by inputting the original learning data into the learned machine learning model. Then, the learning device 10 acquires each feature by inputting each piece of learning data into the learned machine learning model after learning of each restorer has been completed and generates each piece of restored data by inputting each feature into each learned restorer. Thereafter, the learning device 10 determines a retainable feature on the basis of a restoration degree of each piece of restored data.

In other words, when selecting a feature to be stored as a substitute of the original learning data in deep learning, the learning device 10 can select a feature to be retained according to a decoding degree of decoded data decoded from each feature. Therefore, the learning device 10 can appropriately determine whether or not to retain the feature.

### [Reference Technique]

Here, a reference technique that is generally used will be described as a technique for evaluating a feature to be retained. First, deep learning for the neural networks, which is common to both of the reference technique and the first embodiment, will be described.

Deep learning is a method for learning a parameter using the gradient method so that a machine learning model that obtains an output y by converting an input x with a function having a differentiable parameter obtains a desired y with respect to training data x. A machine learning model of the deep learning includes a model h = h_{N} ( · · ·h₂ (h₁ (x))) including any differentiable operation h in addition to a model y = g_{N} (f_{N} (· · · g₁ (f₁ (x))) including a linear transformation f (x) = Ax + b and a nonlinear activating function g.

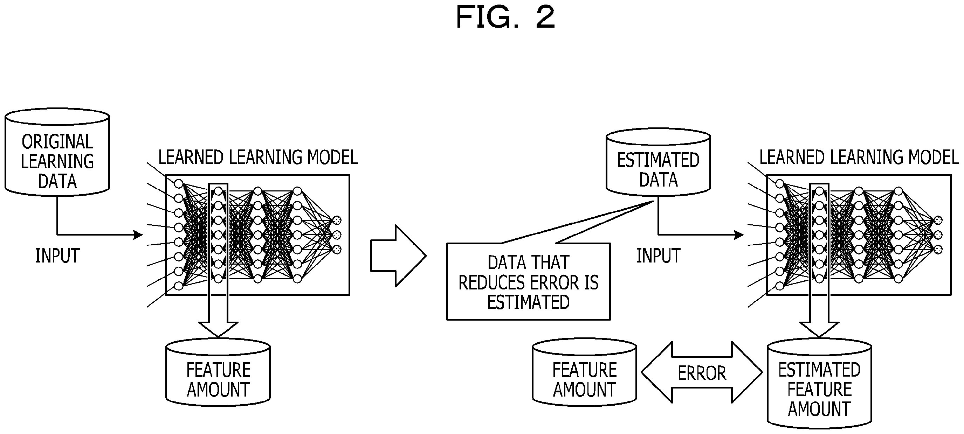

Next, the reference technique will be specifically described. FIG. 2 is a diagram for explaining the reference technique. As illustrated in FIG. 2, in the reference technique, a feature is generated by inputting original learning data used to learn a machine learning model into the learned machine learning model. Subsequently, input data to be the feature is estimated by the gradient method. For example, in a case where it is assumed that the feature be z and the learning data to be input be x, estimated data x* = argminₓ d (f (x), z) is calculated using the gradient method. Here, the reference f indicates a differentiable machine learning model equation indicating transformation from x to z, and the reference d indicates a differentiable distance function or error function (squared error).

Thereafter, an estimated feature corresponding to the estimated data is acquired by inputting the estimated data into the learned machine learning model, and the estimated data that reduces an error between the estimated feature and the feature obtained from the original learning data is estimated. Such a reference technique is a technique for estimating the original learning data from the feature, and the plurality of pieces of learning data can be estimated from the single feature. Therefore, it is not possible to determine whether or not the feature is a feature at a level that can be retained. Therefore, in the first embodiment, the problem of the reference technique is improved by generating an index used to determine whether or not the feature is a feature at the level that can be retained.

### [Functional Configuration]

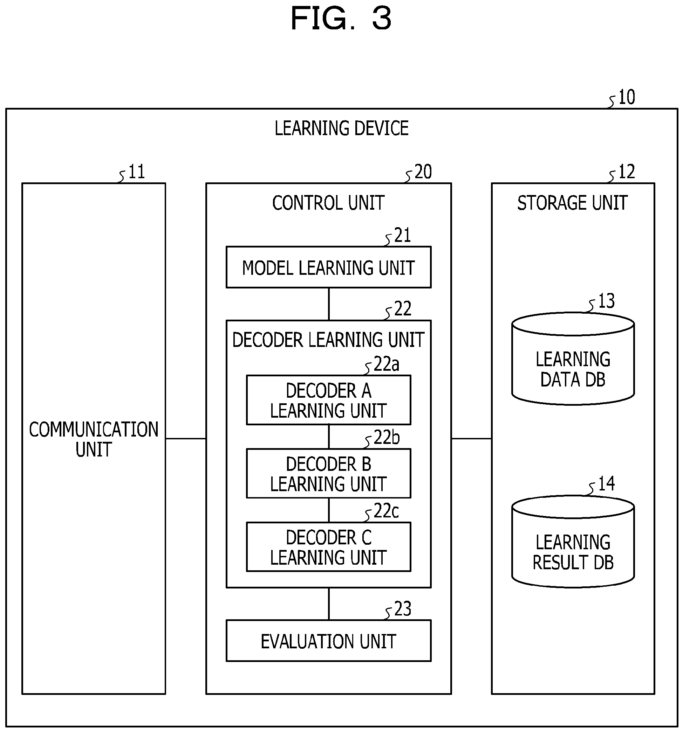

FIG. 3 is a functional block diagram illustrating a functional configuration of the learning device 10 according to the first embodiment. As illustrated in FIG. 3, the learning device 10 includes a communication unit 11, a storage unit 12, and a control unit 20.

The communication unit 11 is a processing unit that controls communication between other devices, and is, for example, a communication interface or the like. For example, the communication unit 11 receives a processing start instruction from a terminal of an administrator. Furthermore, the communication unit 11 receives learning data (input data) to be learned from the terminal of the administrator and the like and stores the learning data in a learning data DB 13.

The storage unit 12 is an example of a storage device that stores programs and data and is, for example, a memory, a hard disk, and the like. The storage unit 12 stores the learning data DB 13 and a learning result DB 14.

The learning data DB 13 is a database that stores learning data used to learn a machine learning model. The learning data stored here may be labeled data to which a correct answer label is applied by the administrator and the like or may be data with no label to which the correct answer label is not applied. Note that, as the learning data, various types of data such as images, moving images, documents, or graphs can be adopted.

The learning result DB 14 is a database that stores learning results. For example, the learning result DB 14 stores determination results (classification result) of the learning data by the control unit 20 and various parameters learned through machine learning or deep learning.

The control unit 20 is a processing unit that controls processing of the entire learning device 10 and is, for example, a processor and the like. The control unit 20 includes a model learning unit 21, a decoder learning unit 22, and an evaluation unit 23. Note that the model learning unit 21, the decoder learning unit 22, and the evaluation unit 23 are examples of a process executed by an electronic circuit included in a processor or the like, a processor, or the like.

The model learning unit 21 is a processing unit that learns a machine learning model using the NN and the like. Specifically, the model learning unit 21 performs NN learning using the learning data stored in the learning data DB 13 and stores the learning result in the learning result DB 14.

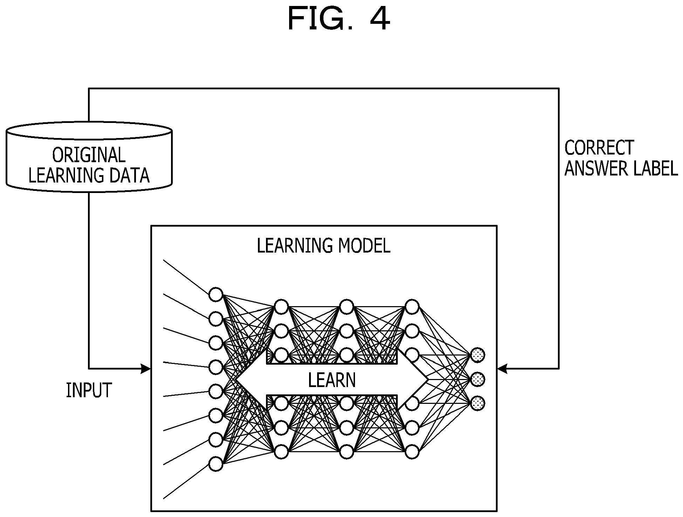

FIG. 4 is a diagram for explaining a learning example of the machine learning model. As illustrated in FIG. 4, the model learning unit 21 reads learning data with a correct answer label stored in the learning data DB 13. Then, the model learning unit 21 inputs the learning data to the NN and obtains an output result. Thereafter, the model learning unit 21 learns the NN so as to reduce an error between the output result and the correct answer label. Note that, as the learning method, a known method such as a gradient method or backpropagation can be adopted. Furthermore, the model learning unit 21 can continue the learning processing until a determination accuracy of the NN becomes equal to or more than a threshold, or can end the learning processing at any timing such as the predetermined number of times or until learning of all the pieces of learning data is completed.

The decoder learning unit 22 is a processing unit that includes a learning unit for each decoder that is a machine learning model using the NN and decodes data from a feature and learns each decoder using the original learning data. Specifically, the decoder learning unit 22 reads various parameters from the learning result DB 14 and constructs a machine learning model using a neural network and the like to which various parameters are set. Then, the decoder learning unit 22 sets the decoder for each intermediate layer included in the NN that is a machine learning model. Then, the decoder learning unit 22 generates restored data from each feature by each decoder and learns each decoder so that each piece of restored data and the original learning data approach each other.

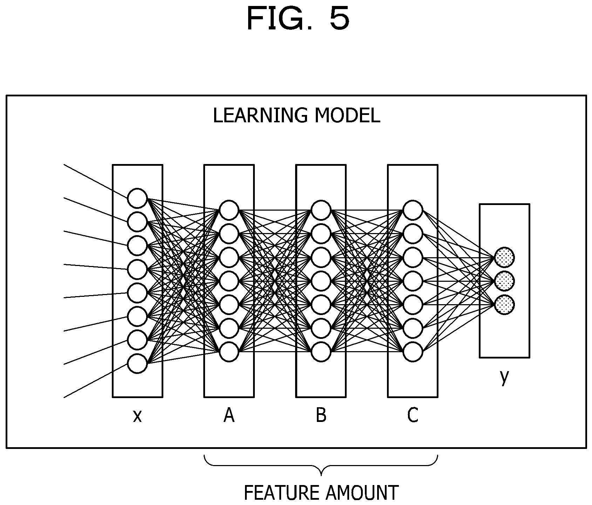

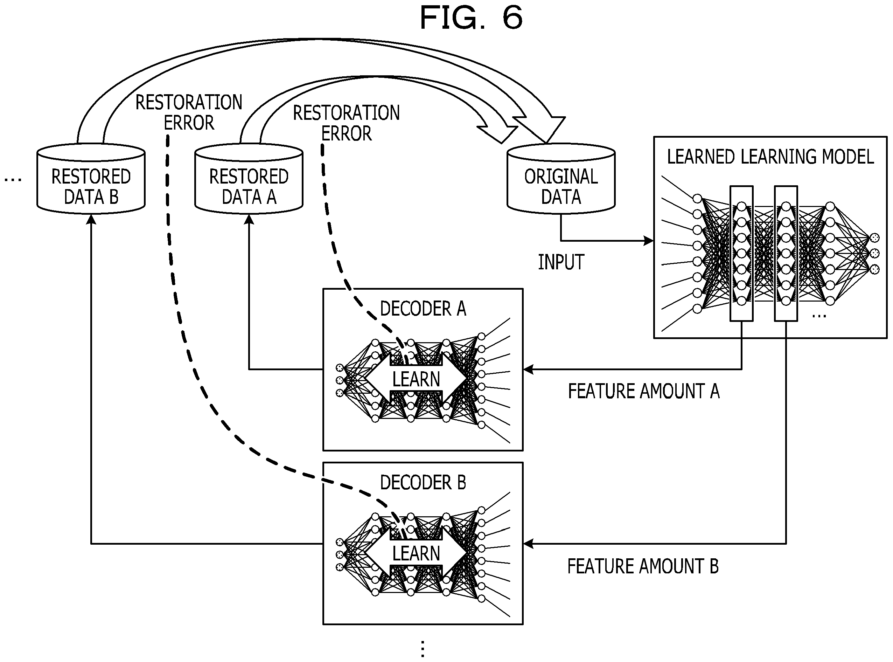

Here, specific description will be made with reference to FIGs. 5 and 6. FIG. 5 is a diagram for explaining a feature, and FIG. 6 is a diagram for explaining learning of a decoder. Here, as illustrated in FIG. 5, a case will be described where the NN includes an input layer to which an input x is input, three intermediate layers, and an output layer that outputs y. In this case, information obtained in the first intermediate layer is the feature A, information obtained in the second intermediate layer is the feature B, and information obtained in the third intermediate layer is the feature C. Therefore, the decoder learning unit 22 prepares a decoder A corresponding to the feature A, a decoder B corresponding to the feature B, and a decoder C corresponding to the feature C and performs learning of each decoder.

Specifically, as illustrated in FIG. 6, a decoder A learning unit 22a of the decoder learning unit 22 inputs the original learning data to the learned machine learning model (NN) and acquires the feature A. Then, the decoder A learning unit 22a inputs the feature A to the decoder A and generates the restored data A. Thereafter, the decoder A learning unit 22a calculates an error between the restored data A and the original learning data (hereinafter, may be referred to as restoration error) and learns the decoder A so as to reduce the error.

Similarly, a decoder B learning unit 22b of the decoder learning unit 22 inputs the original learning data to the learned machine learning model (NN) and acquires the feature B. Then, the decoder B learning unit 22b inputs the feature B to the decoder B and generates the restored data B. Thereafter, the decoder B learning unit 22b calculates an error between the restored data B and the original learning data and learns the decoder B so as to reduce the error.

Similarly, a decoder C learning unit 22c of the decoder learning unit 22 inputs the original learning data to the learned machine learning model (NN) and acquires the feature C. Then, the decoder C learning unit 22c inputs the feature C to the decoder C and generates the restored data C. Thereafter, the decoder C learning unit 22c calculates an error between the restored data C and the original learning data and learns the decoder C so as to reduce the error.

Note that each learning unit stores the learning result of the decoder in the learning result DB 14. Furthermore, for example, a squared error or the like can be adopted as the error, and the gradient method, the backpropagation, or the like can be adopted for learning of the decoder. Furthermore, regarding learning of the decoder, learning processing can be continued until a determination accuracy of the NN becomes equal to or more than a threshold, and the learning of the decoder can end at any timing such as the predetermined number of times. Furthermore, the number of learners is an example and can be arbitrarily set and changed.

The evaluation unit 23 is a processing unit that evaluates a degree of restoration of each feature using each learned decoder, for each piece of learning data. Specifically, the evaluation unit 23 reads various parameters corresponding to the machine learning model from the learning result DB 14 and constructs a machine learning model including a neural network or the like to which various parameters are set, and reads various parameters corresponding to each decoder from the learning result DB 14 and constructs each decoder including a neural network or the like to which various parameters are set. Then, the evaluation unit 23 inputs learning data to be retained to the learned machine learning model and acquires each feature. Subsequently, the evaluation unit 23 inputs each feature to the corresponding learned decoder and generates each piece of decoded data. Then, the evaluation unit 23 determines a restoration status of each piece of decoded data and determines a feature to be retained.

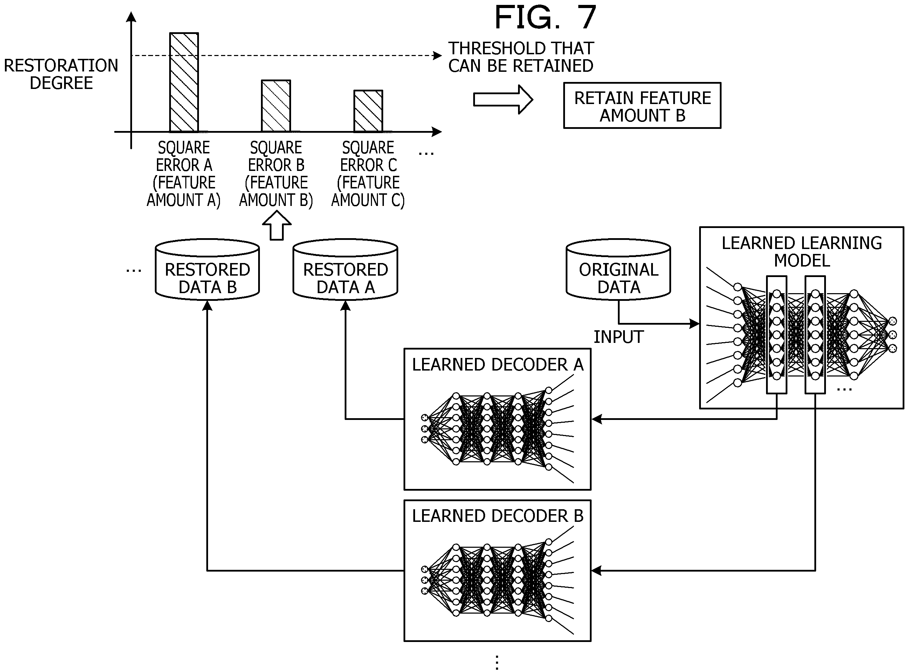

FIG. 7 is a diagram for explaining an example of an evaluation method. As illustrated in FIG. 7, the evaluation unit 23 inputs the original learning data to the learned machine learning model. Then, the evaluation unit 23 inputs each of the feature A, feature B, and feature C obtained from the learned machine learning model to the learned decoder A, the learned decoder B, and the learned decoder C, respectively, and generates the restored data A, the decoded data B, and the decoded data C.

Thereafter, the evaluation unit 23 calculates a squared error A between the restored data A and the original learning data, a squared error B between the restored data B and the original learning data, and a squared error C between the restored data B and the original learning data. Then, the evaluation unit 23 specifies the squared error B that is less than a preset threshold that can be retained and is closest to the threshold from among the squared error A, the squared error B, and the squared error C. As a result, the evaluation unit 23 determines to retain the feature B that is a restoration source of the squared error B.

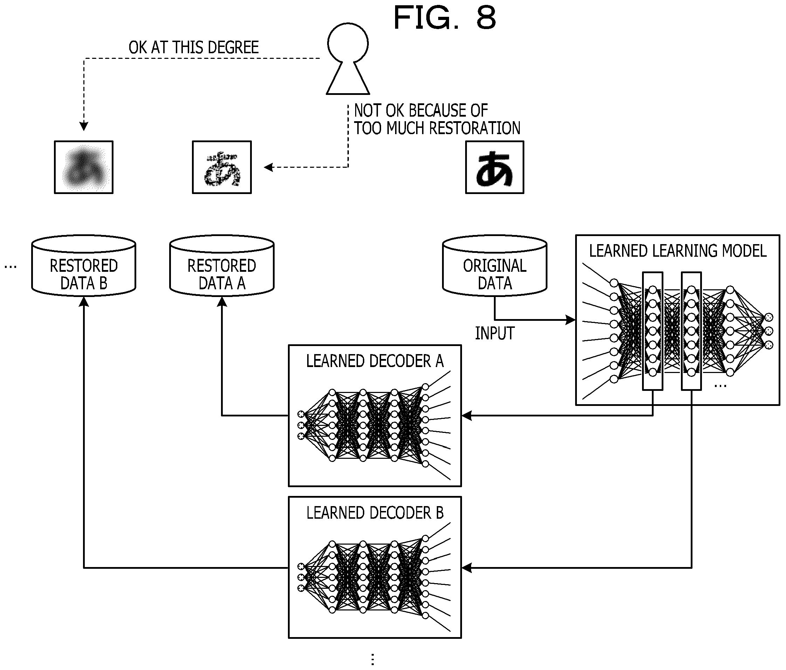

Furthermore, the evaluation unit 23 can present the restored data to a user who is a provider of the original learning data and makes the user evaluate the restored data. FIG. 8 is a diagram for explaining another example of the evaluation method. As illustrated in FIG. 8, the evaluation unit 23 generates the restored data A, the decoded data B, and the decoded data C using the original learning data and each restorer using the method similar to that in FIG. 7. Then, the evaluation unit 23 presents the restored data A, the decoded data B, and the decoded data C to the user. Here, it is assumed that the user determine that the restored data A and the restored data C are too much restored and the restored data B is restored to the extent that the original learning data cannot be recognized. In this case, the evaluation unit 23 determines to retain the feature B corresponding to the restored data B. Note that the method in FIG. 8 is particularly effective in a case where the learning data is image data or the like.

### [Flow of Processing]

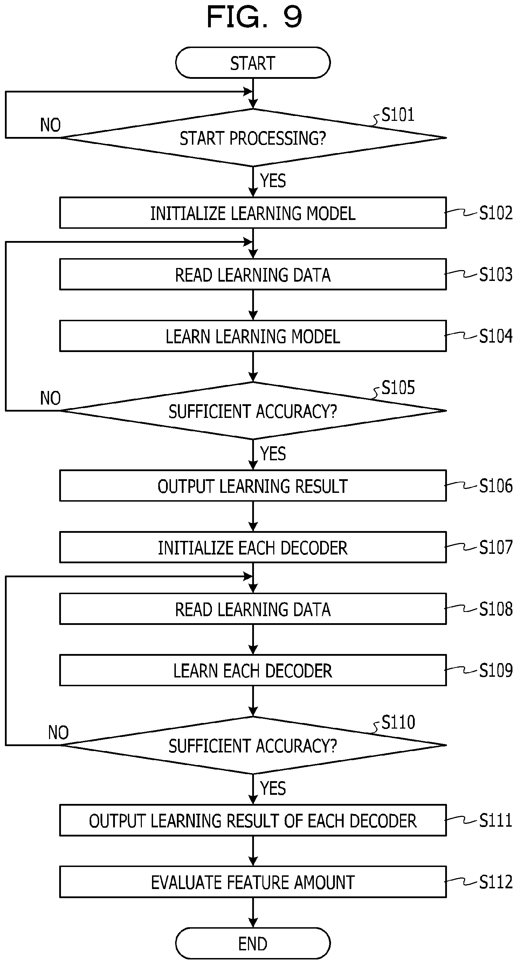

FIG. 9 is a flowchart illustrating a flow of processing. As illustrated in FIG. 9, when instructed to start processing (S101: Yes), the model learning unit 21 initializes a machine learning model (S102).

Subsequently, the model learning unit 21 reads the learning data stored in the learning data DB 13 (S103) and learns the machine learning model using the learning data (S104). Then, in a case where an accuracy is not equal to or more than a threshold (S105: No), the model learning unit 21 returns to S103 and repeats learning. On the other hand, when the accuracy is equal to or more than the threshold (S105: Yes), the model learning unit 21 outputs the learning result to the learning result DB 14 (S106).

Thereafter, when initializing each decoder (S107), the decoder learning unit 22 reads the learning data stored in the learning data DB 13 (S108) and learns each decoder using the learning data and the learned machine learning model (S109).

Subsequently, in a case where the accuracy is not equal to or more than the threshold (S110: No), the decoder learning unit 22 returns to S108 and repeats learning. On the other hand, when the accuracy is equal to or more than the threshold (S110: Yes), the decoder learning unit 22 outputs the learning result to the learning result DB 14 (Sill).

Thereafter, the evaluation unit 23 generates each feature from the learned machine learning model for each piece of the learning data to be retained, generates each decoded data by inputting each feature to each learned decoder, and evaluates each feature (S112).

### [Effects]

As described above, the learning device 10 can cause a reverse converter to perform learning and obtain a restorer from a feature to original data and causes the reverse converter to perform learning so as to directly minimize an error between the restored data and the original learning data. Furthermore, the learning device 10 can convert the feature into a format in which the feature is restored to the original data as much as possible so that the feature to be retained and the original learning data are formed in a comparable format. As a result, the learning device 10 can appropriately evaluate each of the plurality of features using the restored data generated from each feature.

### [Second Embodiment]

By the way, each decoder of the learning device 10 can learn restoration to another feature previous to the feature used by the decoder, not to the original learning data. With this learning, it is possible to reduce variations in difficulty of learning each restorer. Therefore, in a second embodiment, an example will be described in which restoration to the previous feature, not to the original learning data is learned. Note that, here, an example will be described in which restoration to a feature output from a previous intermediate layer is performed. However, the restoration target is not limited to this, and may be an intermediate layer previous to the corresponding intermediate layer.

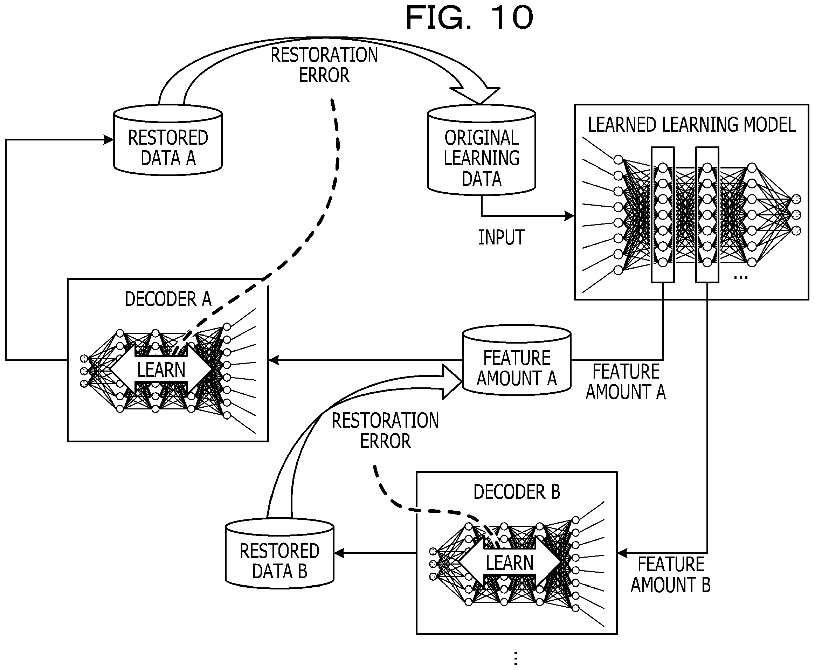

FIG. 10 is a diagram for explaining a learning example according to the second embodiment. As illustrated in FIG. 10, a decoder learning unit 22 inputs original learning data to a learned machine learning model. Then, a decoder A learning unit 22a generates restored data A by inputting a feature A output from the learned machine learning model to a decoder A, and learns the decoder A so as to reduce a restoration error that is an error between the restored data A and the original learning data.

On the other hand, a decoder B learning unit 22b generates restored data B obtained by inputting a feature B obtained from the learned machine learning model to a decoder B and restoring the feature B to the feature A obtained from the previous intermediate layer. Then, the decoder B learning unit 22b learns the decoder B so as to reduce a restoration error that is an error between the feature A obtained from the previous intermediate layer and the restored data B. Furthermore, for the decoder C, similarly, the decoder C learning unit 22c generates restored data C obtained by inputting a feature C obtained from the learned machine learning model to a decoder C and restoring the feature C to the feature B obtained from the previous intermediate layer. Then, the decoder C learning unit 22c learns the decoder C so as to reduce a restoration error that is an error between the feature B obtained from the previous intermediate layer and the restored data C.

Note that a method similar to that in the first embodiment can be adopted for the evaluation of the feature that is executed after learning of each decoder. For example, the evaluation unit 23 calculates a squared error A between the restored data A and the original learning data, a squared error B between the restored data B and the feature A, and a squared error C between the restored data C and the feature B and determines a feature to be retained on the basis of the threshold.

### [Third Embodiment]

By the way, when learning a restorer, a learning device 10 can learn the restorer using an error at the time of reconversion to a feature, not an error between restored data and original learning data. As a result, it is possible to learn the restorer in consideration of a feature conversion method, and as a result of improving a restoration accuracy of the restored data, it is possible to improve an evaluation accuracy of the feature.

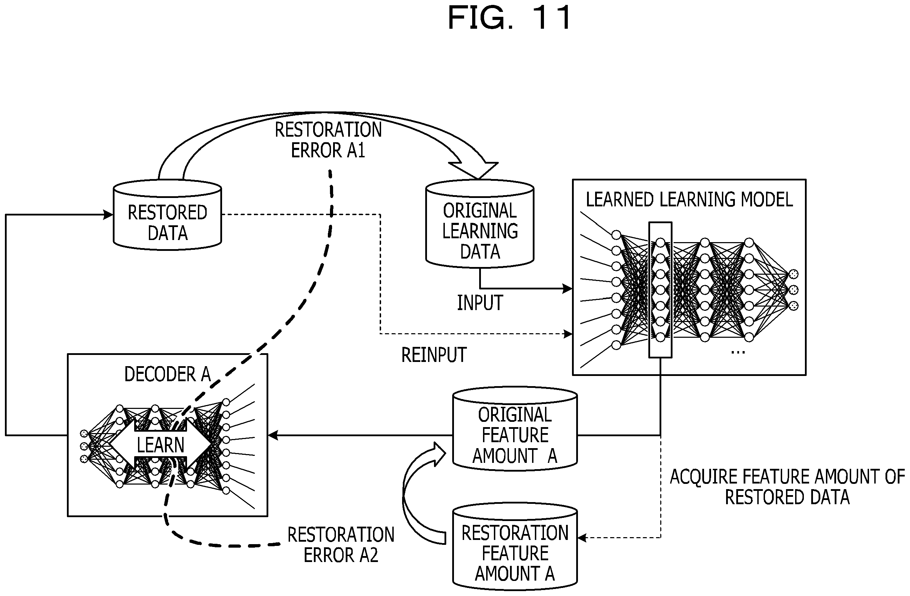

FIG. 11 is a diagram for explaining a learning example according to a third embodiment. As illustrated in FIG. 11, a decoder learning unit 22 inputs the original learning data to a learned machine learning model. Then, a decoder A learning unit 22a generates restored data A by inputting an output feature (original feature A) to a decoder A and calculates a restoration error A1 that is an error between the restored data A and the original learning data.

Moreover, subsequently, the decoder learning unit 22 inputs the restored data A to the learned machine learning model. Then, the decoder A learning unit 22a acquires a feature output from the learned machine learning model (restoration feature A) and calculates a restoration error A2 that is an error between the original feature A and the restoration feature A. Thereafter, the decoder A learning unit 22a learns the decoder A so as to reduce the restoration error A1 and the restoration error A2. Note that it is possible to perform learning using only the restoration error A2. Furthermore, for other decoders, similarly, learning is performed using the two restoration errors.

### [Fourth Embodiment]

By the way, in the first to third embodiments, an example has been described in which each decoder is learned after learning of a machine learning model is completed. However, the present invention is not limited to this. For example, the machine learning model and each decoder can be learned in parallel.

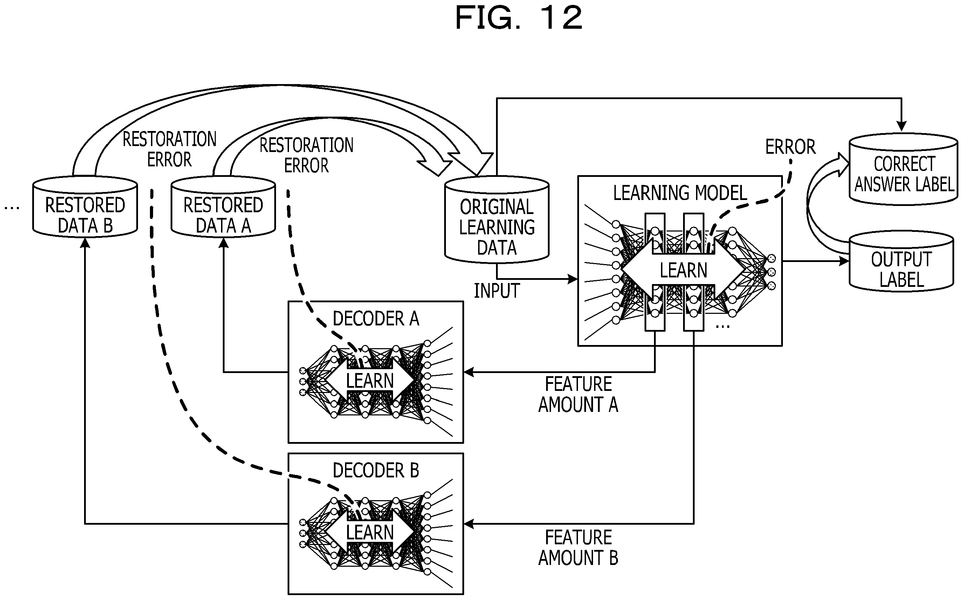

FIG. 12 is a diagram for explaining a learning example according to a fourth embodiment. As illustrated in FIG. 12, when inputting learning data to which a correct answer label is applied to the machine learning model, a learning device 10 learns the machine learning model and each decoder in parallel.

Specifically, when the learning data is input, a model learning unit 21 learns the machine learning model so as to reduce an error between the correct answer label and an output label. In parallel to this, a decoder A learning unit 22a generates restored data A by inputting a feature A obtained from the machine learning model to a decoder A and learns the decoder A so as to reduce a restoration error between the restored data A and the original learning data. Similarly, a decoder B learning unit 22b generates restored data B by inputting a feature B obtained from the machine learning model to a decoder B and learns a decoder B so as to reduce a restoration error between the restored data B and the original learning data.

In this way, because the learning device 10 can concurrently learn the machine learning model and each decoder in parallel using each piece of learning data, it is possible to shorten a total learning time.

### [Fifth Embodiment]

Although the embodiments of the present invention have been described above, the present invention may be implemented in various different forms in addition to the embodiments described above.

### [Learning Data of Decoder]

In the above embodiments, an example has been described in which the learning data used to learn the machine learning model is used for learning of the decoder. However, the present invention is not limited to this, and it is possible to learn the machine learning model and the decoder using different pieces of learning data.

For example, a learning device 10 learns a machine learning model using data X and generates a learned machine learning model M. Subsequently, the learning device 10 inputs the data X to the machine learning model M and acquires a feature X of the data X. Thereafter, the learning device 10 inputs data Y that is a different piece of data to the machine learning model M and acquires a feature Y of the data Y. Then, the learning device 10 learns a restorer R using the data Y and the feature Y with a method similar to that in the first embodiment.

Thereafter, the learning device 10 generates restored data X' by inputting the feature X to the learned restorer R. Then, the learning device 10 compares the original data X and the restored data X' with a method similar to that in the first embodiment and evaluates the feature X.

In this way, when the learned model learned using the data X and the feature of the data X are leaked, the learning device 10 can evaluate how much a third party who has obtained the learned model and the feature can restore the data X. For example, considering data restoration by a third party, although the third party retains the feature of the learning data X, the third party does not retain the learning data X. Therefore, the third party attempts to learn a restorer from the different data Y that is retained and the feature of the data Y obtained by inputting the data Y to the machine learning model. Thereafter, it is considered that the third party inputs the feature of the data X to the learned restorer and attempts to restore the original data X.

Against this, the learning device 10 can evaluate a restoration degree of the learning data restored from the feature by the restorer that is restored using the data different from the learning data of the machine learning model M. Therefore, the learning device 10 can perform evaluation in consideration of a risk at the time of information leakage.

### [Machine learning model, Decoder]

In the above embodiments, a case where the NN is applied to the machine learning model and the decoder has been described as an example. However, the present invention is not limited to this, and it is possible to adopt other general deep learning and machine learning. Furthermore, as the learning method of the NN, various known methods such as backpropagation can be adopted. Furthermore, regarding an error calculated at the time of learning the NN, various known methods for calculating an error, such as a squared error, used at the time of learning of deep learning can be adopted. Furthermore, the number of intermediate layers of each NN, the number of features, the number of restorers, or the like are merely examples and can be arbitrarily set and changed. Furthermore, in addition to providing the restorer for each intermediate layer of the NN, it is possible to provide the restorer for only a specified intermediate layer among a plurality of intermediate layers of the NN. Furthermore, as an example of the feature described above, in a case where a learning target is an image, an edge or contrast in an image, positions of eyes and a nose in an image, or the like can be exemplified.

### [Evaluation Target]

In the above embodiments, an example has been described in which the feature is evaluated for each piece of learning data. However, the present invention is not limited to this, and it is possible to evaluate the above-described feature only for learning data specified by an administrator or the like and determine whether or not to retain.

### [System]

Pieces of information including a processing procedure, a control procedure, a specific name, various types of data, and parameters described above in the above document or illustrated in the drawings may be changed in any ways unless otherwise specified. Furthermore, the specific examples, distributions, numerical values, and the like described in the embodiments are merely examples, and may be changed in any ways.

In addition, each component of each device illustrated in the drawings is functionally conceptual and does not necessarily have to be physically configured as illustrated in the drawings. In other words, specific forms of distribution and integration of each device are not limited to those illustrated in the drawings. That is, all or a part of the devices may be configured by being functionally or physically distributed and integrated in any units according to various sorts of loads, usage situations, or the like. Furthermore, all or any part of each processing function performed in each device may be implemented by a central processing unit (CPU) and a program analyzed and executed by the CPU, or may be implemented as hardware by wired logic.

### [Hardware]

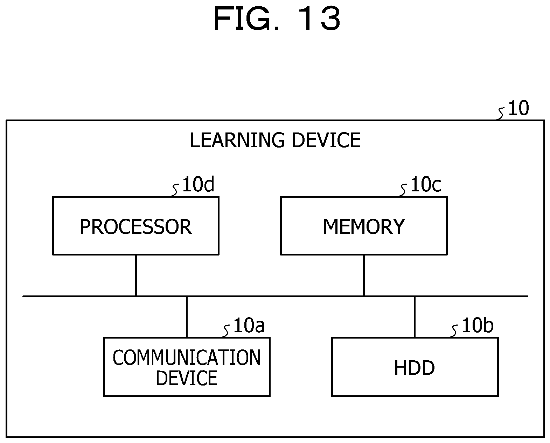

FIG. 13 is a diagram for explaining a hardware configuration example. As illustrated in FIG. 13, the learning device 10 includes a communication device 10a, a hard disk drive (HDD) 10b, a memory 10c, and a processor 10d. In addition, each of the units illustrated in FIG. 13 is mutually connected by a bus or the like.

The communication device 10a is a network interface card or the like and communicates with other device. The HDD 10b stores programs for operating the functions illustrated in FIG. 3 and DBs.

The processor 10d reads a program that executes processing similar to that of each processing unit illustrated in FIG. 3 from the HDD 10b or the like to develop the read program in the memory 10c, thereby operating a process for executing each function described with reference to FIG. 3 or the like. In other words, this process executes a function similar to the function of each processing unit included in the learning device 10. Specifically, the processor 10d reads a program that has functions similar to those of the model learning unit 21, the decoder learning unit 22, the evaluation unit 23, or the like from the HDD 10b or the like. Then, the processor 10d executes a process for executing processing similar to those of the model learning unit 21, the decoder learning unit 22, the evaluation unit 23, or the like.

As described above, the learning device 10 operates as an information processing device that executes the learning method by reading and executing the program. Furthermore, the learning device 10 may also implement functions similar to the functions of the above-described embodiments, by reading the program described above from a recording medium by a medium reading device and executing the read program described above. Note that this program referred to in other embodiment is not limited to being executed by the learning device 10. For example, the embodiments may be similarly applied to a case where another computer or server executes the program, or a case where such computer and server cooperatively execute the program.

This program may be distributed via a network such as the Internet. In addition, this program is recorded on a computer-readable recording medium such as a hard disk, flexible disk (FD), CD-ROM, Magneto-Optical disk (MO), or Digital Versatile Disc (DVD), and can be executed by being read from the recording medium by the computer.

### REFERENCE SIGNS LIST

- 10: learning device
- 11: communication unit
- 12: storage unit
- 13: learning data DB
- 14: learning result DB
- 20: control unit
- 21: model learning unit
- 22: decoder learning unit
- 22a: decoder A learning unit
- 22b: decoder B learning unit
- 22c: decoder C learning unit
- 23: evaluation unit

## Claims

1. A learning program for causing a computer to execute processing comprising:
generating restored data using a plurality of restorers respectively corresponding to a plurality of features from the plurality of features generated by a machine learning model corresponding to each piece of input data, for each piece of the input data input to the machine learning model; and
making the plurality of restorers perform learning so that each of the plurality of pieces of restored data respectively generated by the plurality of restorers approaches the input data.

2. The learning program according to claim 1, for causing the computer to execute processing further comprising:
generating the plurality of pieces of restored data respectively by the plurality of restorers by inputting the input data to the plurality of learned restorers;
calculating an error between each of the plurality of pieces of restored data and the input data; and
selecting a feature to be retained from among the plurality of features that is a generation source of each of the plurality of pieces of restored data on the basis of the error.

3. The learning program according to claim 1, wherein
the machine learning model is a machine learning model that includes a neural network, and
the generating processing generates the plurality of pieces of restored data respectively from the plurality of features output from respective intermediate layers using the plurality of restorers associated with the respective intermediate layers included in the neural network.

4. The learning program according to claim 3, wherein
the generating processing generates restored data of which a restoration target is a feature output from an intermediate layer previous to an intermediate layer associated with each of the plurality of restorers using the plurality of restorers, and
the learning processing learns each of the plurality of restorers so as to reduce an error between the restored data and the feature to be the restoration target.

5. The learning program according to claim 1, for causing the computer to execute processing further comprising
acquiring a restoration feature that is a feature of the restored data and a feature generated by the machine learning model by inputting the restored data to the machine learning model for each of the plurality of restorers, wherein
the learning processing makes each of the plurality of restorers perform learning so as to reduce each of an error between the restored data and the input data and an error between the feature to be a restoration target and the restoration feature.

6. The learning program according to claim 1, for causing the computer to execute processing further comprising:
learning the machine learning model on the basis of an error between an output result from the machine learning model and a correct answer label by inputting first input data to which the correct answer label is applied to the machine learning model;
generating restored data using a plurality of restorers respectively corresponding to the plurality of features from the plurality of features generated by the learned machine learning model by inputting second input data different from the first input data to the learned machine learning model; and
making the plurality of restorers perform learning so that the plurality of pieces of restored data respectively generated by each of the plurality of restorers approaches the second input data.

7. The learning program according to claim 6, for causing the computer to execute processing further comprising:
acquiring a plurality of pieces of restored data generated by each of the plurality of restorers by inputting the first input data to the plurality of learned restorers learned by using the second input data;
calculating an error between each of the plurality of pieces of restored data and the first input data; and
selecting a feature to be retained from among a plurality of features that is a generation source of each of the plurality of pieces of restored data on the basis of the error.

8. A learning method, executed by a computer, comprising processing of:
generating restored data using a plurality of restorers respectively corresponding to a plurality of features from the plurality of features generated by a machine learning model corresponding to each piece of input data, for each piece of the input data input to the machine learning model; and
making the plurality of restorers perform learning so that the plurality of pieces of restored data respectively generated by each of the plurality of restorers approaches the input data.

9. A learning device comprising:
a generation unit configured to generate restored data using a plurality of restorers respectively corresponding to a plurality of features from the plurality of features generated by a machine learning model corresponding to each piece of input data, for each piece of the input data input to the machine learning model; and
a learning unit configured to make the plurality of restorers perform learning so that the plurality of pieces of restored data respectively generated by each of the plurality of restorers approaches the input data.
